# EUROPÄISCHE PATENTSCHRIFT

(11) **EP 2 762 254 B1**
(45) Veröffentlichungstag und Bekanntmachung des Hinweises auf die Patenterteilung: **25.10.2017**
(21) Anmeldenummer: 13000532.5
(22) Anmeldetag: 01.02.2013
(51) Int. Cl.: B23C 3/06, B23B 5/18, B23Q 1/76

(54) **Kurbelwellendreh- und Fräsmaschine**
Crankshaft turning and milling machine
Tour à vilebrequins et fraiseuse

(43) Veröffentlichungstag der Anmeldung: 06.08.2014
(60) Teilanmeldung: 15002368.7
(73) Patentinhaber: Gildemeister Drehmaschinen GmbH, 33689 Bielefeld (DE)
(72) Erfinder: Halm, Christian, 33739 Bielefeld (DE)
(74) Vertreter: Schober, Mirko

(56) Entgegenhaltungen:
- EP-A1- 1 428 612
- EP-A1- 2 210 699
- DE-A1- 10 200 774
- US-A- 5 647 705

## Beschreibung

Die Erfindung betrifft eine Kurbelwellendreh- und Fräsmaschine.
Eine entsprechende Vorrichtung ist z. B. aus DE 100 52 443 A1, das den nächstliegenden Stand der Technik gegenüber dem Gegenstand des Anspruchs 1 darstellt. Das Kurbelwellenwerkstück wird dort wahlweise an seinen Enden zwischen Spitzen oder im Spannfutter eingespannt. Der jeweils von einer Spitze gehaltene Endbereich des Kurbelwellenwerkstücks kann durch Drehen oder Fräsen bearbeitet werden, indem die Backen des zugehörigen Spannfutters so weit zurückfahrbar sind, dass die Werkzeuge der Bearbeitungsaggregate den Endbereich des Kurbelwellenwerkstücks erreichen können. Zur Bearbeitung der Hublager des Kurbelwellenwerkstücks - etwa durch eine Fräsbearbeitung, bei der das Kurbelwellenwerkstück um seine Hauptachse C mit Vorschubgeschwindigkeit gedreht wird - muss das Kurbelwellenwerkstück in eine definierte Drehlage verbracht werden. Dies geschieht in der genannten Druckschrift dadurch, dass ein Drehlagenanschlag und ein Stößel vorgesehen sind, wobei letzterer quer zur Vorschubrichtung Z verschieblich im Spannfutter gelagert ist, so dass er einen dem Spannfutter benachbarten Hublagerzapfen gegen den Drehlagenanschlag drückt.
Nachteilig an der bekannten Maschine ist, dass das Spannfutter mit einer Vielzahl von Verstelleinrichtungen ausgebildet sein muss.

Aus DE 103 29 677 A1 ist bekannt, zur Ausrichtung der Drehlage einer Kurbelwelle bei einer Werkzeugmaschine eine spezielle Lünette einzusetzen. Diese Lünette weist zusätzlich zu ihren Zentrierelementen verstellbare Stützbacken auf. Die Stützbacken sind so ausgelegt, dass sie zur Ausrichtung der Drehlage der Kurbelwelle am Hublager derselben angreifen können. Dieser Stützbacken muss während der Bearbeitung wieder eingefahren werden, weil er sonst die Drehbewegung des Werkstücks stören würde. Zudem hat die bekannte Vorrichtung den Nachteil, dass die dort beschriebene Lünette für einen Werkstückwechsel mit anderen Abmessungen, etwa anderen Abständen zwischen Drehachse und Hubzapfen, nur bedingt tauglich ist, da eine aufwändige Remontage der Richtbacken der Lünette erforderlich ist.

Aus DE 36 25 218 A1 ist ein Revolverkopf mit daran angebrachter, mit dem Revolverkopf integral verschieblicher Lünette bekannt. Die Anordnung der Lünette hat den Sinn, die hydraulische Versorgung der Lünette mit einen Hydraulikmedium zu verbessern.

Aus US 5,647,705 A ist eine reine Kurbelwellenfräsmaschine, die außer dem Drehaggregat ansonsten alle Merkmale des Oberbegriffs des Anspruchs 1 offenbart, bekannt, bei der zur Unterstützung der Hauptlager der Kurbelwelle eine Lünette vorgesehen ist. Die Lünette ist auf einem in Spindelachsrichtung verfahrbaren Schlitten gelagert, welcher zusammen mit dem Schlitten eines Werkzeugrevolvers in Spindelachsrichtung verschieblich ist. Beide Schlitten sind mit einer Kupplung verbunden.

Aufgabe der vorliegenden Erfindung ist es, eine Kurbelwellendreh- und Fräsmaschine anzugeben, die in ihrer Konstruktion vereinfacht ist und zudem eine erhöhte Bearbeitungsgenauigkeit aufweist.

Gelöst wird diese Aufgabe durch eine Kurbelwellendreh- und Fräsmaschine mit den Merkmalen des Anspruchs 1. Vorteilhafte Ausführungsformen finden sich in den Unteransprüchen.

Erfindungsgemäß ist die Kurbelwellendreh- und Fräsmaschine mit zwei Werkstückspindeln mit Spannfuttern vorgesehen, zwischen denen ein Werkstück aufgespannt werden kann. Bevorzugt ist dabei vorgesehen, dass wenigstens eine der Werkstückspindeln eine gegenüber dem zugehörigen Spannfutter verschiebliche Zentriereinrichtung, insbesondere Zentrierspitze, aufweist. Die erfindungsgemäße Kurbelwellendreh- und Fräsmaschine ist mit einer in Z-Richtung und quer dazu verschieblich gelagerten Lünette ausgebildet. Hierdurch wird ermöglicht, dass das Kurbelwellenwerkstück einer kompletten Dreh- und Fräsbearbeitung unterzogen werden kann, ohne dass das Werkstück dazu neu auf- oder auch nur umgespannt werden muss. Zudem unterstützt die Lünette das Kurbelwellenwerkstück bei der Fräsbearbeitung der Haupt- und Hublager, so dass eine Durchbiegung vermieden wird und so die Präzision der Bearbeitung erhöht wird.

Die größte Abdrängkraft tritt insbesondere beim Fräsen der Hub- und Hauptlager auf. Bevorzugt ist daher vorgesehen, dass die Lünette an einem, insbesondere in Querrichtung verschieblichen Schlitten, z.B. einem Kreuzschlitten, angeordnet ist. Dieser Kreuzschlitten trägt bevorzugt auch das Drehaggregat.
Erfindungsgemäß weist das Drehaggregat einen Werkzeugrevolver auf. Dieser umfasst ein Revolvergehäuse mit einem Antrieb für eine im Revolvergehäuse gelagerte Revolverwelle und eine über einen revolverwellenseitigen Befestigungsflansch an der Revolverwelle auswechselbar angebrachte, Drehwerkzeuge aufnehmende Revolverscheibe. Die Lünette ist am Werkzeugrevolver angeordnet. Dadurch kann die Freizügigkeit der Lünette erhöht werden und die Maschine erhält zusätzliche Flexibilität.

Da der Werkzeugrevolver, bei welchem es sich vorzugsweise um einen solchen mit einer Revolverscheibe handelt, die um die Revolverdrehachse durch einen numerisch gesteuerten Antrieb stufenlos dreh- und stillsetzbar ist, eine große Zahl von Werkzeugen trägt, wäre ein einzelner Werkzeugwechsel aufwändig und würde zu hohen Stillstandzeiten führen.
Es ist deshalb bevorzugt ein Werkzeugrevolver vorgesehen, welcher eine auswechselbare Revolverscheibe aufweist. Dazu ist diese an der Revolverwelle angeflanscht. Damit eine Demontage der Lünette nicht erforderlich ist, kann insbesondere vorgesehen sein, dass die Lünette zwischen dem Befestigungsflansch und der Revolverscheibe angeordnet ist. Dadurch bleibt die Lünette, die bevorzugt an dem Befestigungsflansch der Revolverwelle angebracht ist, beim Revolverscheibenwechsel an ihrer Position.

Gemäß einer vorteilhaften Ausführungsform weist der Werkzeugrevolver eine Revolverscheibe auf, die an ihrem Umfang im Bereich der Lünette eine Aussparung aufweist. Dadurch kann das Kurbelwellenwerkstück während der Bearbeitung in dieser Aussparung wenigstens teilweise eintauchen.

Die Lünette kann zudem schwenkbar ausgebildet sein, so dass sie aus dem Flugkreis des um die Spindelachse drehenden Kurbelwellenwerkstücks heraus geschwenkt werden kann, damit eine Drehbearbeitung der Endbereiche des Kurbelwellenwerkstücks erfolgen kann.

Die Erfindung wird nachfolgend anhand des in den Figuren 1 bis 7 gezeigten Ausführungsbeispiels näher erläutert.
- Figur 1 -: zeigt eine perspektivische Frontansicht der erfindungsgemäßen Kurbelwellendreh- und Fräsmaschine;
- Figur 2 -: zeigt einen Querschnitt II-II durch die Maschine aus Figur 1;
- Figur 3 -: zeigt einen vergrößerten Ausschnitt der Maschine gemäß Figur 1 mit der Lünette in Ausrichtposition;
- Figur 4 -: zeigt einen vergrößerten Ausschnitt der Maschine gemäß Figur 1 mit eingespanntem Kurbelwellenwerkstück und während der Drehbearbeitung;
- Figur 5 -: zeigt einen Ausschnitt der Maschine nach Figur 1, bei der die Lünette ein Hauptlager des Kurbelwellenwerkstücks unterstützt;
- Figur 6 -: zeigt eine perspektivische Ansicht eines Werkzeugrevolvers als Drehaggregat in der Maschine nach Figur 1;
- Figur 7 -: zeigt eine Darstellung des Drehaggregats gemäß Figur 6 mit entfernter Revolverscheibe.

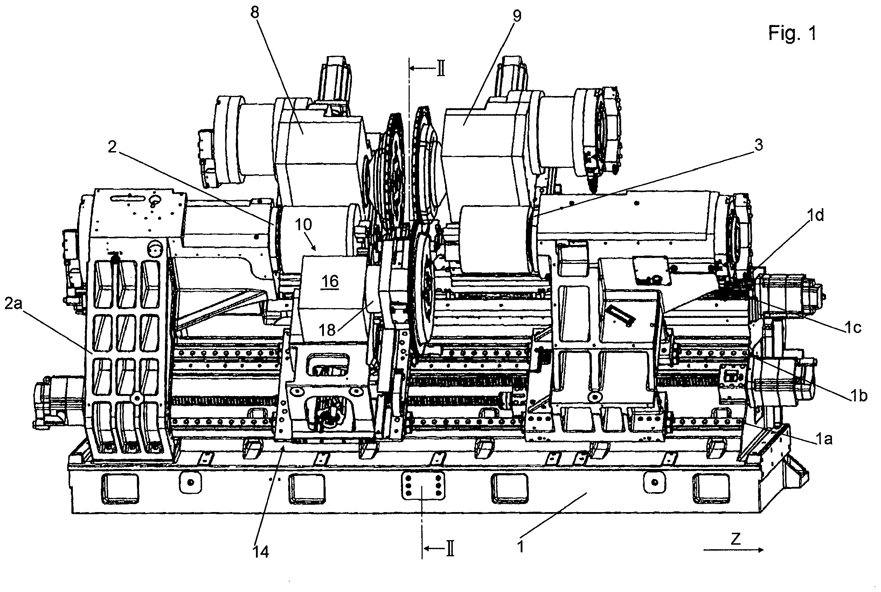

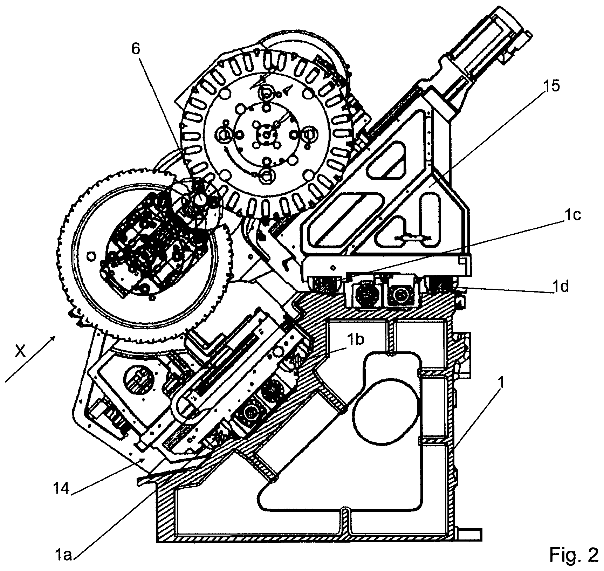

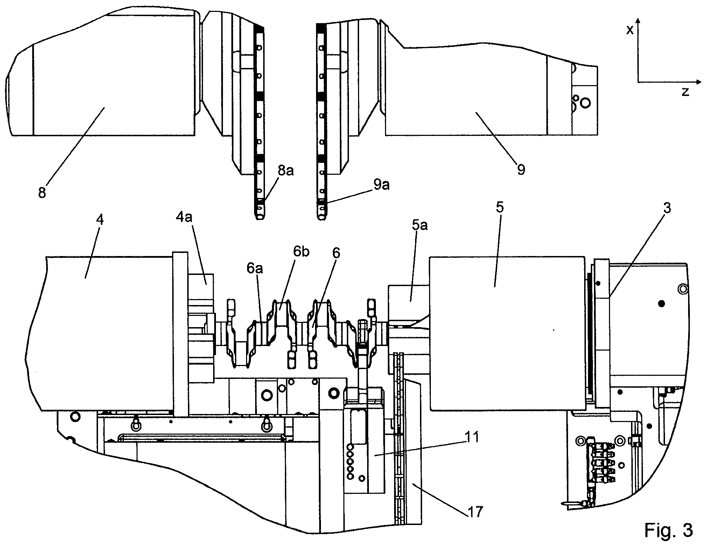

Die in Figur 1 gezeigte Kurbelwellendreh- und Fräsmaschine weist ein Maschinenbett 1 auf. Auf diesem sind untere Führungen 1a und 1b sowie obere Führungen 1c und 1d vorgesehen. An einem Ende des Maschinenbetts 1 ist ein Spindelkasten 2a unverschieblich befestigt. In diesem ist eine erste Werkstückspindel 2 drehbar um ihre Spindelachse gelagert. Auf den unteren Führungsbahnen 1a, 1b ist eine zweite Werkstückspindel 3 in Spindelachsrichtung verschieblich gelagert. Beide Spindelachsen sind parallel zur Richtung Z ausgerichtet. Die Werkstückspindel 3 trägt ein zugehöriges Spannfutter 5, die Werkstückspindel 2 trägt ein zugehöriges Spannfutter 4, welches dem Spannfutter 5 zugewandt ist, so dass zwischen den Spannfuttern 4, 5 ein Kurbelwellenwerkstück 6 (vgl. Fig. 2 bis 5) aufgespannt werden kann.
Auf den Führungsbahnen 1a, 1b ist ein Kreuzschlitten 14 gelagert, der in Spindelachsrichtung Z und quer dazu in Richtung X verschieblich ist. Der Kreuzschlitten 14 trägt ein Drehaggregat 10, welches in dem gezeigten Beispiel einen Werkzeugrevolver aufweist.

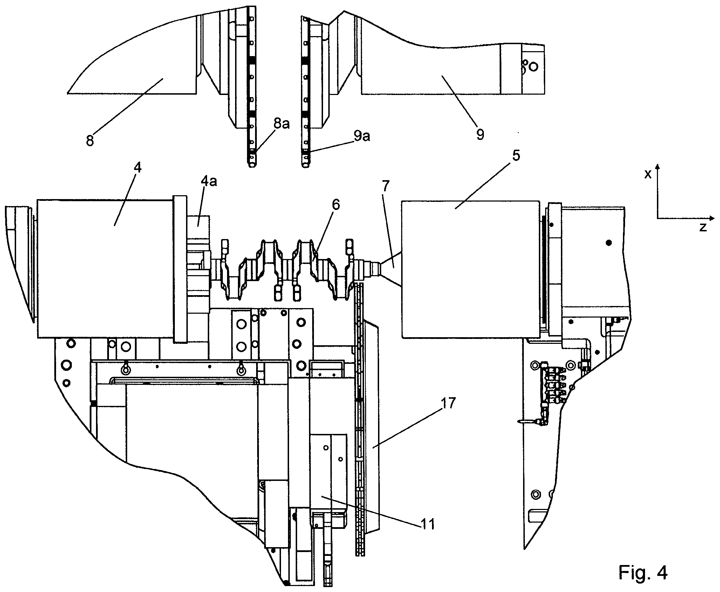

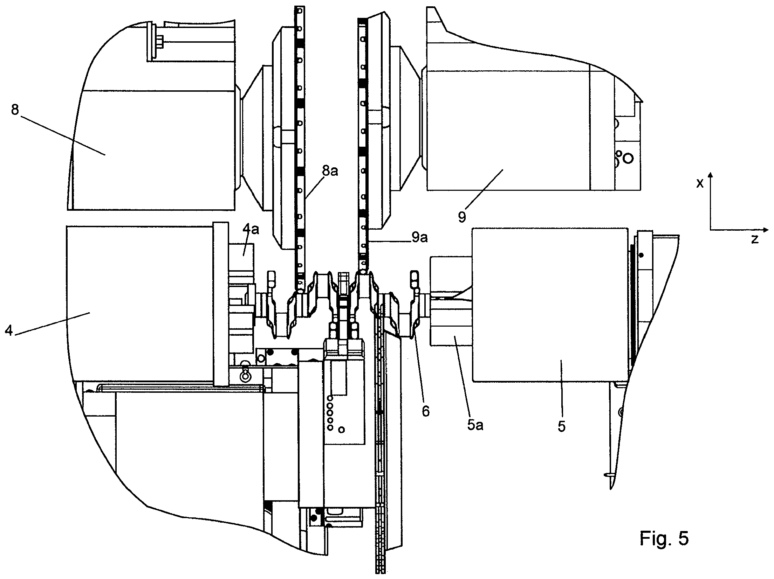

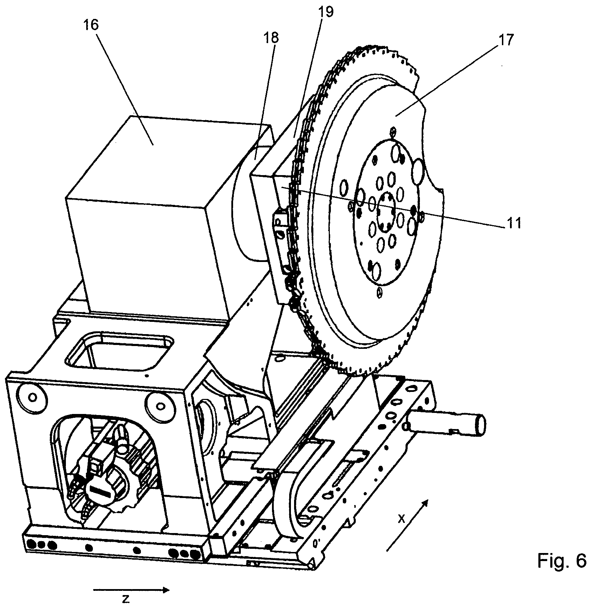

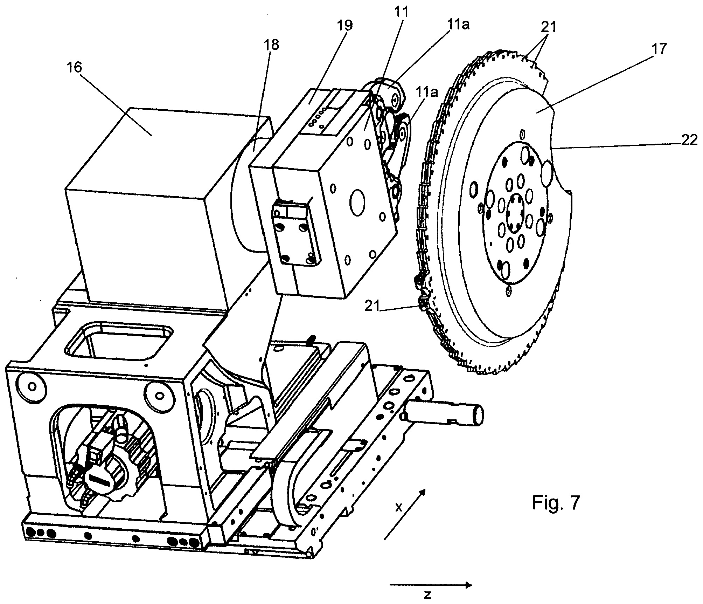

Auf den oberen Führungsbahnen 1c, 1d (oben und unten bedeutet im Wesentlichen in Richtung X voneinander beabstandet) sind zwei Fräsaggregate 8, 9 angeordnet, welche mittels eines Kreuzschlittens 15 in Spindelachsrichtung Z und in Richtung X verfahrbar sind. Die beiden Fräsaggregate 8, 9 weisen im gezeigten Beispiel auf den einander zugewandten Seiten jeweils scheibenförmig ausgebildete Fräser 8a, 9a auf, welche zwischen die Wangen des Kurbelwellenwerkstücks 6 bis zu deren Hauptlagern 6a und Hublagern 6b eintauchen können, Figur 5.
Das Drehaggregat 10 weist bevorzugt, wie insbesondere in den Figuren 6 und 7 gezeigt, einen Werkzeugrevolver 16 auf, in dessen Gehäuse eine Revolverwelle 18 drehbar gelagert ist. Die Revolverwelle 18 trägt einen Befestigungsflansch 19, an dem eine Lünette 11 befestigt ist, welche im gezeigten Beispiel drei Lünettenarme 11a zur Zentrierung eines Hauptlagers 6a des Kurbelwellenwerkstücks 6 aufweist. An einer Stirnseite der Lünette 11 ist eine Revolverscheibe 17 angebracht, die auf ihrem Umfang eine Mehrzahl von Drehwerkzeugen 21 trägt. Die Revolverscheibe 17 ist ebenfalls dazu ausgelegt, durch eine Verschiebung in Richtung X zwischen die Wangen des Kurbelwellenwerkstücks 6 einzutauchen, Figur 4. In Richtung der Lünettenarme 11a weist die Revolverscheibe 17 optional eine Aussparung 22 auf, in die das Kurbelwellenwerkstück 6 teilweise eintauchen kann. Bevorzugt ist die Revolverscheibe 17, wie in Figur 7 gezeigt, leicht vom Werkzeugrevolver 16 lösbar, wenn ihre Drehwerkzeuge 21 verschlissen sind.

Sie kann dann durch eine andere Revolverscheibe ersetzt werden. Dazu ist die Lünette 11 bevorzugt zwischen Revolverwelle und Revolverscheibe 17 vorgesehen. Bei dieser Anordnung kann die Revolverscheibe 17 ausgetauscht werden, ohne dass die Lünette 11 selbst von dem Befestigungsflansch 19 gelöst werden oder ihre Versorgungsleitungen getrennt werden müssen. Lange Stillstandzeiten werden so vermieden.

Die im Beispiel gezeigte Anbringung der Lünette 11 hat den Vorteil, dass sie deutlich mehr Spielraum aufweist und insbesondere bei der gezeigten Anordnung Bearbeitungsvorgänge nicht behindert. Das Kurbelwellenwerkstück 6 wird so in den Spannfuttern 4 und 5 eingesetzt, dass ein Hublager 6b zwischen den Lünettenarmen 11a liegt. Beim Schließen der Lünettenarme 11a um den Hubzapfen 6b wird das Kurbelwellenwerkstück 6 in seine Ausgangsposition gedreht. Diese Lagefixierung dient einer Steuerung zur Synchronisation der Vorschubbewegung des Fräsaggregats in Richtung X mit der jeweiligen Drehlage des Kurbelwellenwerkstücks 6 um die C-Achse für alle zu bearbeitenden Hublager 6b.
Soll eine Bearbeitung der (den Spannfuttern 4, 5 zugewandten) Endbereiche des Kurbelwellenwerkstücks 6 durchgeführt werden, so wird der jeweilige Endbereich von dem zugehörigen Spannfutter freigegeben.

In Figur 4 ist dies für das Spannfutter 5 gezeigt. Das Kurbelwellenwerkstück 6 wird am Endbereich durch eine Zentrierspitze 7 abgestützt, welche verschieblich (in Z-Richtung) im Spannfutter 5 gelagert ist. Das Kurbelwellenwerkstück 6 wird in dieser Lage durch das Spannfutter 4 in Rotation versetzt. Die Spannfutter 4 und 5 sind bevorzugt baugleich ausgeführt und verfügen jeweils über eine Zentrierspitze mit den oben beschriebenen Eigenschaften. So kann jeder der beiden Endbereiche des Kurbelwellenwerkstücks 6 gleichermaßen gedreht und bearbeitet werden. Die Lünette 11 ist bevorzugt um eine Schwenkachse parallel zur Z-Achse schwenkbar, so dass sie bei der Drehbearbeitung des Kurbelwellenwerkstücks 6 aus dem Flugkreis des Kurbelwellenwerkstücks 6 herausgeschwenkt werden kann.

Bei der Fräsbearbeitung der Hauptlager 6a oder der Hublager 6b, diese ist in Figur 5 gezeigt, stützt die Lünette 11 das Kurbelwellenwerkstück 6 an einem der Hauptlager 6a ab, so dass eine Durchbiegung des Kurbelwellenwerkstücks 6 infolge der Abdrängkräfte des Fräsaggregats nicht möglich ist. Das Kurbelwellenwerkstück 6 kann sich dabei durch die Aussparung 22 in der Revolverscheibe 17 ungehindert drehen.

## Patentansprüche

1. Kurbelwellendreh- und Fräsmaschine mit zwei Werkstückspindeln (2, 3), von denen wenigstens eine in Spindelachsrichtung (Z) verschieblich ist und die jeweils ein Spannfutter (4, 5) zum Einspannen der jeweiligen Endbereiche eines Kurbelwellenwerkstücks (6) aufweisen, mit mindestens einem Fräsaggregat (8, 9) und wenigstens einem Drehaggregat (10), die so angeordnet sind, dass mit ihnen sowohl die Umfangsflächen der Endbereiche als auch die Hauptlager (6a) und Hublager (6b) des Kurbelwellenwerkstücks (6) bearbeitet werden können, wobei weiter wenigstens eine in Spindelachsrichtung (Z) verschieblich gelagerte Lünette (11) zum Angreifen an das Kurbelwellenwerkstück (6) vorgesehen ist,
**dadurch gekennzeichnet,**
**dass** die Lünette (11) in einer zur Spindelachsrichtung (Z) senkrechten Querrichtung (X) verschieblich gelagert ist, wobei das Drehaggregat (10) einen Werkzeugrevolver mit einer Revolverwelle und eine über einen revolverwellenseitigen Befestigungsflansch (19) an der Revolverwelle (18) auswechselbar angebrachte, Drehwerkzeuge (21) aufnehmende Revolverscheibe (17) aufweist, wobei die Lünette (11) am Werkzeugrevolver, insbesondere am Revolvergehäuse oder an der Revolverwelle (18), angeordnet ist.

2. Kurbelwellendreh- und Fräsmaschine nach Anspruch 1,
**dadurch gekennzeichnet,**
**dass** die Lünette (11) an einem insbesondere in Querrichtung (X) verschieblichen Schlitten angeordnet ist.

3. Kurbelwellendreh- und Fräsmaschine nach Anspruch 2,
**dadurch gekennzeichnet,**
**dass** das Drehaggregat (10) und die Lünette (11) an demselben Schlitten angeordnet sind.

4. Kurbelwellendreh- und Fräsmaschine nach einem der vorigen Ansprüche,
**dadurch gekennzeichnet,**
**dass** die Revolverscheibe (17) um die Revolverdrehachse durch einen numerisch gesteuerten Antrieb stufenlos dreh- und stillsetzbar ist.

5. Kurbelwellendreh- und Fräsmaschine nach einem der vorigen Ansprüche,
**dadurch gekennzeichnet,**
**dass** die Lünette (11) zwischen dem Befestigungsflansch (19) und der Revolverscheibe (17) angeordnet ist.

6. Kurbelwellendreh- und Fräsmaschine nach Anspruch 5,
**dadurch gekennzeichnet,**
**dass** die Lünette (11) an dem Befestigungsflansch (19) angebracht ist.

7. Kurbelwellendreh- und Fräsmaschine nach einem der vorigen Ansprüche,
**dadurch gekennzeichnet,**
**dass** die Revolverscheibe (17) an ihrem Umfang im Bereich der Lünette (11) eine Aussparung (22) aufweist.

8. Kurbelwellendreh- und Fräsmaschine nach einem der vorigen Ansprüche,
**dadurch gekennzeichnet,**
**dass** wenigstens eine der Werkstückspindeln (2, 3) eine gegenüber dem zugehörigen Spannfutter (4, 5) verschiebliche Zentriereinrichtung, insbesondere Zentrierspitze (7), aufweist.

9. Kurbelwellendreh- und Fräsmaschine nach einem der vorigen Ansprüche,
**dadurch gekennzeichnet,**
**dass** die Lünette (11) schwenkbar ausgebildet ist, so
**dass** sie aus dem Flugkreis des um die Spindelachse (Z) drehenden Kurbelwellenwerkstücks (6) heraus geschwenkt werden kann.

## Claims

1. Crankshaft turning and milling machine with two workpiece spindles (2, 3), of which at least one is displaceable in the axial direction (Z) of the spindle and which each have a tension chuck (4, 5) for clamping the respective end regions of a crankshaft workpiece (6), with at least one milling assembly (8, 9) and at least one turning assembly (10) which are arranged so that with these it is possible to machine both the circumferential faces of the end regions and also the main bearing (6a) and pin bearings (6b) of the crankshaft workpiece (6), wherein at least one bezel (11) mounted displaceable in the spindle axial direction (Z) is further provided for engaging on the crankshaft workpiece (6)
**characterised in that**
the bezel (11) is mounted so as to be displaceable in a transverse direction (X) perpendicular to the spindle axial direction (Z), wherein the turning assembly (10) has a tool revolver with a revolver shaft and a revolver disc (17) which receives turning tools (21) which are attached interchangeably on the revolver shaft (18) via a fastening flange (19) on the side of the revolver shaft, wherein the bezel (11) is arranged on the tool revolver, more particularly on the revolver housing or on the revolver shaft (18).

2. Crankshaft turning and milling machine according to claim 1
**characterised in that**
the bezel (11) is arranged on a slide carriage which is displaceable more particularly in the transverse direction (X).

3. Crankshaft turning and milling machine according to claim 2
**characterised in that**
the turning assembly (10) and the bezel (11) are arranged on the same slide carriage.

4. Crankshaft turning and milling machine according to one of the preceding claims,
**characterised in that**
the revolver disc (17) can be turned and stopped steplessly about the revolver axis of rotation through a numerically controlled drive.

5. Crankshaft turning and milling machine according to one of the preceding claims
**characterised in that**
the bezel (11) is arranged between the fastening flange (19) and the revolver disc (17).

6. Crankshaft turning and milling machine according to claim 5
**characterised in that**
the bezel (11) is attached to the fastening flange (19).

7. Crankshaft turning and milling machine according to one of the preceding claims
**characterised in that**
the revolver disc (17) has a recess (22) on its periphery in the region of the bezel (11).

8. Crankshaft turning and milling machine according to one of the preceding claims
**characterised in that**
at least one of the workpiece spindles (2,3) has a centring device, more particularly a centring tip (7), which is displaceable relative to the associated tension chuck (4, 5).

9. Crankshaft turning and milling machine according to one of the preceding claims
**characterised in that**
the bezel (11) is configured to be pivotable so that it can be pivoted out from the flight circle of the crankshaft workpiece (6) which is turning about the spindle axis (Z).

## Revendications

1. Machine de tournage et de fraisage de vilebrequins avec deux broches porte-outil (2,3), dont l'une au moins peut être déplacée dans la direction de l'axe de la broche (Z), et dont chacune présente un mandrin de serrage (4, 5) pour le serrage des extrémités respectives d'un vilebrequin à usiner (6), avec au moins un ensemble de fraisage (8, 9) et au moins un ensemble de tournage (10), qui sont disposés de manière à ce qu'ils puissent usiner aussi bien les surfaces circonférentielles des zones d'extrémité que les paliers principaux (6a) et les paliers de levage (6b) du vilebrequin à usiner (6), sachant qu'au moins une lunette (11), montée de manière à pouvoir être déplacée dans la direction de l'axe de la broche (Z), est en outre prévue pour être mise en prise avec le vilebrequin à usiner (6),
**caractérisée en ce que**
la lunette (11) est montée de manière à pouvoir être déplacée dans une direction (X) perpendiculaire à la direction de l'axe de la broche (Z), sachant que l'ensemble de tournage (10) présente un revolver porte-outil, comprenant un arbre de revolver et un plateau de revolver (17), qui, installé de manière interchangeable sur l'arbre de revolver (18), par l'intermédiaire d'une bride de fixation (19), côté arbre de revolver, reçoit des outils de tournage (21), sachant que la lunette (11) est disposée sur le revolver porte-outil, en particulier sur le boîtier de revolver ou sur l'arbre de revolver (18).

2. Machine de tournage et de fraisage de vilebrequins selon la revendication 1,
**caractérisée en ce que**
la lunette (11) est disposée sur un chariot, qui peut être déplacé, en particulier dans la direction transversale (X).

3. Machine de tournage et de fraisage de vilebrequins selon la revendication 2,
**caractérisée en ce que**
l'ensemble de tournage (10) et la lunette (11) sont disposés sur le même chariot.

4. Machine de tournage et de fraisage de vilebrequins selon l'une des revendications précédentes,
**caractérisée en ce que**
le plateau de revolver (17) peut être mis en rotation ou être arrêté en continu par un entraînement à commande numérique.

5. Machine de tournage et de fraisage de vilebrequins selon l'une des revendications précédentes,
**caractérisée en ce que**
la lunette (11) est disposée entre la bride de fixation (19) et le plateau de revolver (17)

6. Machine de tournage et de fraisage de vilebrequins selon la revendication 5,
**caractérisée en ce que**,
la lunette (11) est montée sur la bride de fixation (19).

7. Machine de tournage et de fraisage de vilebrequins selon l'une des revendications précédentes,
**caractérisée en ce que**
le plateau de revolver (17) présente un évidement (22) sur son pourtour, dans la région de la lunette (11).

8. Machine de tournage et de fraisage de vilebrequins selon l'une des revendications précédentes,
**caractérisée en ce que**
l'une des broches porte-pièce (2, 3) au moins présente un dispositif de centrage, en particulier une pointe de centrage (7), déplaçable par rapport au mandrin de serrage (4, 5) afférent.

9. Machine de tournage et de fraisage de vilebrequins selon l'une des revendications précédentes,
**caractérisée en ce que**
la lunette (11) est conçue pivotante, de manière à ce qu'elle puisse pivoter hors de la trajectoire circulaire du vilebrequin à usiner (6), tournant autour de l'axe de la broche (Z).
